# EUROPÄISCHE PATENTSCHRIFT

(11) **EP 2 490 650 B1**
(45) Veröffentlichungstag und Bekanntmachung des Hinweises auf die Patenterteilung: **01.07.2015**
(21) Anmeldenummer: 10770744.0
(22) Anmeldetag: 01.10.2010
(51) Int. Cl.: B65B 57/14, B65B 1/46, B65B 3/00, G01N 23/04, A61J 3/07

(54) **SENSORVORRICHTUNG FÜR EINE ALS KAPSELFÜLL- UND VERSCHLIEßMASCHINE AUSGEBILDETE VERPACKUNGSMASCHINE ODER FÜR EINE KAPSELKONTROLLVORRICHTUNG**
DEVICE FOR A CLOSING AND CAPSULE FILLING PACKAGING MACHINE OR A CAPSULE CONTROL DEVICE
DISPOSITIF POUR LA FERMETURE ET REMPLISSAGE DU CAPSULES DANS UNE MACHINE D'EMBALLAGE OU POUR LE CONTROLE DES CAPSULES

(30) Priorität: 19.10.2009 DE 102009045809; 28.07.2010 DE 102010038544; 09.02.2010 DE 102010001701
(43) Veröffentlichungstag der Anmeldung: 29.08.2012
(73) Patentinhaber: Robert Bosch GmbH, 70442 Stuttgart (DE)
(72) Erfinder: RUNFT, Werner, 71364 Winnenden (DE); SCHMIED, Ralf, 71691 Freiberg (DE); LIEBHART, Guenter, 71522 Backnang (DE); MAGA, Iulian, 71638 Ludwigsburg (DE); VOGT, Martin, 73614 Schorndorf (DE)
(86) Internationale Anmeldenummer: PCT/EP2010/064616
(87) Internationale Veröffentlichungsnummer: WO 2011/047945

(56) Entgegenhaltungen:
- WO-A1-2004/005903
- DE-A1-102005 016 124
- DE-C1- 19 819 395
- US-A- 3 709 598
- US-A- 4 117 935
- US-A- 5 864 600

## Beschreibung

### Stand der Technik

Die Erfindung betrifft eine Sensorvorrichtung für eine Verpackungsmaschine nach dem Oberbegriff des Anspruchs 1.

Eine Sensorvorrichtung nach dem Oberbegriff des Anspruchs 1 ist aus der US 4,117,935 bekannt. Bei der bekannten Sensorvorrichtung wird eine Streustrahlung mittels eines Detektors erfasst, wobei der Detektor rechtwinklig zum Strahlengang angeordnet ist. Das aus der genannten Schrift bekannte Messprinzip nutzt dabei die Höhe bzw. die Größe einer Streustrahlung, bevor die Strahlung das Behältnis durchquert hat. Aus dem dabei erzeugten Signal wird auf eine Masse in dem Behältnis geschlossen. Als nachteilhaft wird dabei angesehen, dass lediglich stets nur ein einziges Behältnis durchleuchtet bzw. untersucht werden kann.

Aus der US 5,864,600 ist es darüber hinaus bekannt, den Füllstand in einem Behälter mittels einer bildverarbeitenden Kontrolleinrichtung zu kontrollieren. Dabei wird ein örtlich begrenzter Bereich des Behältnisses durchleuchtet. Die bekannte Anordnung ist nur dazu geeignet, den Füllstand innerhalb des Behältnisses zu messen, eine Gewichtsermittlung bei Kapseln oder sonstigen Eigenschaften des Füllguts in einer Kapsel ist mittels der bekannten Anordnung jedoch nicht möglich.

Aus der DE 10 2005 016 124 A1 ist eine weitere Sensorvorrichtung bekannt, die im Bereich einer Kapselfüll- und Verschließeinrichtung angeordnet ist. Die Sensoreinrichtung weist eine Röntgenstrahlungsquelle auf, die mit einem Füllgut, beispielsweise einem pulverförmigen Pharmazeutika, befüllte Behältnisse in Längsrichtung durchstrahlt. Auf der der Röntgenstrahlungsquelle gegenüberliegenden Seite des Behältnisses ist ein Detektor angeordnet, der die Röntgenstrahlung nach Durchgang durch das Behältnis misst und einer Auswerteeinrichtung in analoger Form zuführt. Mittels der soweit bekannten Sensorvorrichtung wird insbesondere das Gewicht des Füllgutes in den Behältnissen ermittelt. Nachteilig bei der zuletzt genannten Sensorvorrichtung ist, dass dadurch, dass die Behältnisse in stufenartigen Aufnahmebohrungen von Aufnahmesegmenten angeordnet sind, beim Durchstrahlen der Behältnisse diese nicht über ihren gesamten Querschnitt erfasst werden, sondern, dass ein Teil des Querschnittes von der Aufnahmebohrung abgedeckt wird. Somit ist das Ergebnis von der Geometrie der Aufnahmebohrung abhängig und verfälscht ggf. das Messergebnis. Darüber hinaus sind weitere Aussagen dadurch, dass die Behältnisse in Richtung der Längsachse der Behältnisse durchstrahlt werden, nur schwierig oder gar nicht möglich, da nur eine relativ begrenzte Fläche des Behältnisses durchleuchtet wird.

Weiterhin ist aus der DE 198 19 395 C1 der Anmelderin eine Wiegeeinrichtung zum Wiegen von Hartgelatinekapseln bekannt, die ein als Flügelrad ausgebildetes Förderelement aufweist, das jeweils eine Kapsel in den Bereich einer hängend angeordneten Wiegegutaufnahme überführt und aus dieser weiterfördert.

Aus der US 5,864,600 ist eine bildverarbeitende Kontrolleinrichtung bekannt, bei der der Füllstand von Behältern mittels einer Strahlenquelle überprüft wird, wobei der Strahl die Behälter senkrecht zu deren Behälterlängsachse durchdringt. Die Behälter sind dabei zueinander beabstandet auf einer horizontal angeordneten Fördereinrichtung angeordnet.

### Offenbarung der Erfindung

Ausgehend von dem dargestellten Stand der Technik liegt der Erfindung die Aufgabe zugrunde, eine Sensorvorrichtung für eine als Kapselfüll- und Verschließeinrichtung ausgebildete Verpackungsmaschine nach dem Oberbegriff des Anspruchs 1 derart weiterzubilden, dass bei konstruktiv relativ einfachem Aufbau auf einfache Art und Weise Rückschlüsse auf das Behältnis bzw. dessen Füllgut ermöglicht werden. Darüber hinaus soll die Sensoreinrichtung eine hohe Leistung aufweisen und die Kapseln im Bereich der Sensoreinrichtung einfach zu fördern bzw. zu positionieren sein. Diese Aufgabe wird bei einer Sensorvorrichtung für eine Verpackungsmaschine mit den Merkmalen des Anspruchs 1 gelöst. Insbesondere ist es erfindungsgemäß vorgesehen, dass zur Erhöhung der Leistung der Vorrichtung sowie zur Verringerung des vorrichtungstechnischen Aufwands mehrere Förderelemente parallel zueinander angeordnet sind, die in Wirkverbindung mit einer gemeinsamen Strahlungsquelle und einem gemeinsamen Detektor angeordnet sind. Es lassen sich somit in einem Schritt jeweils mehrere Behältnisse mittels einer einzigen Strahlungsquelle und mittels eines einzigen Detektors gleichzeitig überprüfen. Weiterhin ist es vorgesehen, dass der Detektor als bildauswertender Detektor ausgebildet ist und mit einer Auswerteeinrichtung zusammenwirkt, die eine digitale Datenauswertung ermöglicht. Somit wird auf einfache Art und Weise ermöglicht, dass verschiedene Parameter bzw. Messergebnisse aus den gewonnenen Signalen bzw. Aufnahmen erzeugt werden können.

Vorteilhafte Weiterbildungen der erfindungsgemäßen Sensorvorrichtung für eine Verpackungsmaschine sind in den Unteransprüchen angegeben.

Als Strahlungsquelle ist in einer bevorzugten Ausführungsform der Erfindung eine Röntgenstrahlungsquelle vorgesehen. Mittels einer Röntgenstrahlungsquelle lässt sich nicht nur auf einfache Art und Weise das Füllgewicht des Behältnisses erfassen, sondern auch beispielsweise die Füllhöhe im Behältnis sowie Beschädigungen des Behältnisses oder ähnliches.

Eine konstruktiv einfach ausgebildete Fördermöglichkeit für die Behältnisse im Bereich der Strahlungsquelle, die gleichzeitig eine Verfälschung der Messergebnisse durch Teile der Vorrichtung verhindert, wird dadurch erzielt, dass in dem Förderelement die Behältnisse als Reihe gestaut angeordnet sind und durch gegenseitigen Anlagekontakt der Behältnisse zumindest im Bereich der Sensorvorrichtung gefördert werden.

Um eine genaue Vermessung, insbesondere des Gewichtes einer Kapsel zu erzielen ist es bevorzugt vorgesehen, dass die mindestens eine Strahlungsquelle zusätzlich in Wirkverbindung mit einem Referenzobjekt angeordnet ist und, dass der Detektor gleichzeitig neben dem Bild des Behältnisses zusätzlich das Bild des Referenzobjekts erfasst und der Auswerteeinrichtung zuführt. Somit wird das Bild des Behältnisses bzw. der Kapsel immer in Bezug zu dem Referenzobjekt gesetzt, so dass absolute Schwankungen zwischen zwei aufeinander folgenden Bildern, die zu einer Verfälschung des Messergebnisses führen würden, ausgeschlossen werden.

Hierbei ist es zur Erhöhung der Messgenauigkeit und zur Vereinfachung der Auswertung besonders vorteilhaft bzw. erforderlich, dass das Referenzobjekt aus einem Material besteht, das zumindest annähernd gleiche Absorptionseigenschaften für die Strahlung, insbesondere für die Röntgenstrahlung, aufweist wie das Behältnis.

Um sicherzustellen, dass genaue und richtige Messergebnisse über die gesamte Toleranzbreite der zu vermessenden Eigenschaft erzielt werden ist es weiterhin wesentlich, dass das Referenzobjekt Bereiche unterschiedlicher Absorptionen für die Strahlung aufweist, wobei wenigstens ein Bereich vorhanden ist, dessen Absorption innerhalb der Toleranzen der zu messenden Eigenschaft des Behältnisses geringer ist als die minimale Absorption des Behältnisses und einen Bereich, dessen Absorption innerhalb der Toleranzen der zu messenden Eigenschaft des Behältnisses (c) größer ist als die maximale Absorption des Behältnisses.

Eine vorteilhafte und einfach zu fertigende Ausgestaltung des Referenzobjektes, bei der die Informationen des Referenzobjektes mittels der Auswerteeinrichtung einfach verarbeitet werden kann wird ermöglicht, wenn das Referenzobjekt keil- oder stufenförmig ausgebildet ist und, wenn das Referenzobjekt derart angeordnet ist, dass sich die Dicke des Referenzobjekts in Strahlungsrichtung der Strahlungsquelle ändert.

In einer weiteren konstruktiven Ausgestaltung der Erfindung ist es vorgesehen, dass der Sensoreinrichtung eine Wiegeeinrichtung nachgeschaltet ist, die wenigstens eine Wiegezelle zum Wiegen des Behältnisses aufweist. Mittels einer derartigen Ausgestaltung wird eine zweite Kontrollmöglichkeit für die Behältnisse geschaffen, so dass nicht nur das Röntgenbild zur Auswertung bzw. qualitativen oder quantitativen Erfassung des Behältnisses, sondern auch die Wiegeeinrichtung dient. Insbesondere lässt sich damit eine zweifache Kontrolle des Füllgewichts ermöglichen, so dass die beiden Messergebnisse gegeneinander verglichen, und bei Unstimmigkeiten auf eine fehlerhafte Prüfeinrichtung geschlossen werden kann. Dadurch arbeitet die beanspruchte Sensorvorrichtung für eine Verpackungsmaschine besonders sicher und zuverlässig.

Weitere Vorteile ergeben sich aus der nachfolgenden Beschreibung bevorzugter Ausführungsbeispiele sowie anhand der Zeichnungen.

Diese zeigen in:
- Fig. 1: eine Kapselfüll- und Verschließmaschine vereinfacht in einer Draufsicht,
- Fig. 2: eine erfindungsgemäße Sensorvorrichtung, wie sie bei einer Verpackungsmaschine gemäß der Fig. 1 verwendet wird, in einer schematischen Seitenansicht und teilweise geschnitten,
- Fig. 3: eine abgewandelte Sensorvorrichtung bei der Verwendung von Aufnahmesegmenten, bei der jeweils zwei Reihen von Kapseln gefördert werden,
- Fig. 4: die Sensorvorrichtung gemäß Fig. 3 in einer vereinfachten Vorderansicht,
- Fig. 5: Beispiele von mittels einer erfindungsgemäßen Vorrichtung aufgenommenen Bildern, welche zur Auswertung einer digitalen Auswerteeinrichtung zugeführt werden,
- Fig. 6: eine Kontrolleinrichtung für Kapseln in einem vereinfachten Längsschnitt,
- Fig. 7: eine gegenüber den Fig. 3 und 4 modifizierte Kapselfüll- und Verschließmaschine in einer vereinfachten Seitenansicht und
- Fig. 8: Beispiele von mittels der Kapselfüll- und Verschließmaschine gemäß der Fig. 7 aufgenommenen Bildern, welche zur Auswertung einer digitalen Auswerteeinrichtung zugeführt.

In den Figuren sind gleiche Bauteile mit der gleichen Bezugsziffer versehen.

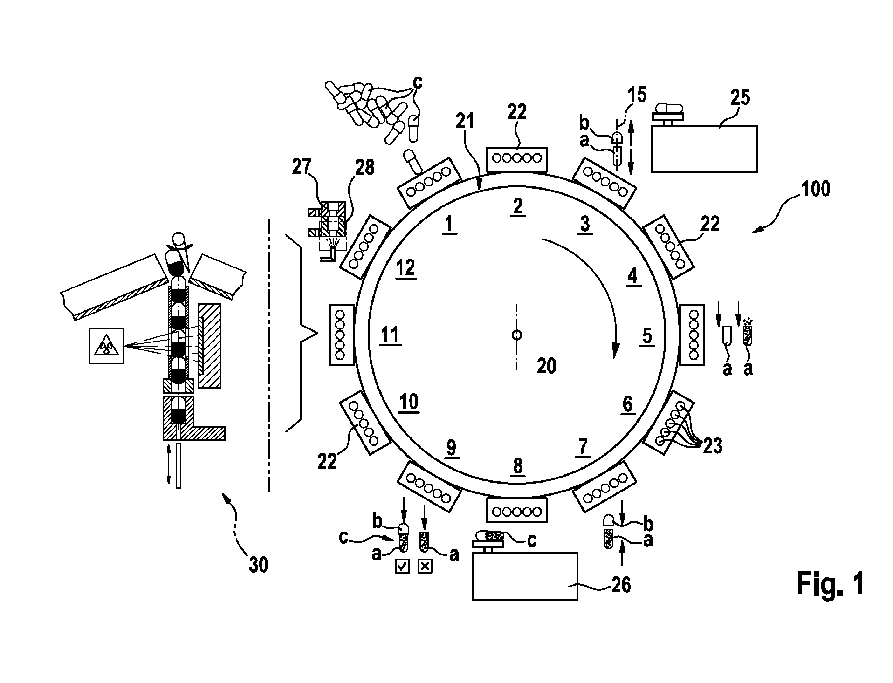

In der Fig. 1 ist eine Verpackungsmaschine in Form einer Kapselfüll- und Verschließmaschine 100 dargestellt. Die Kapselfüll- und Verschließmaschine 100 weist ein in einer vertikalen Achse 20 schrittweise gedrehtes Förderrad 21 auf. Die Kapselfüll- und Verschließmaschine 100 dient zum Füllen und Verschließen von aus einem Kapselunterteil a und einer aufgesteckten Kappe b bestehenden Kapseln c. Hierbei bildet die Kapsel c ein insgesamt längliches Behältnis mit einer Längsachse 15 für ein Füllgut aus, welches insbesondere ein stückiges oder pulverförmiges Pharmazeutika oder ähnliches ist.

Das Förderrad 21 weist Stationen 1 bis 12 auf, die an der Umlaufstrecke des Förderrads 21 angeordnet sind und an denen Behandlungseinrichtungen angeordnet sind. Die soweit beschriebene Kapselfüll- und Verschließmaschine 100 ist als standardisierte Verpackungsmaschine ausgebildet, sodass je nach Anwendungsfall nicht an allen Stationen 1 bis 12 Behandlungseinrichtungen angeordnet sein müssen. Ferner sind an dem Förderrad 21 an dessen Außenumfang in gleichmäßigen Winkelabständen zwölf aus einem Oberteil 27 und einem Unterteil 28 (siehe Station 12) bestehende Aufnahmesegmente 22 für jeweils fünf in Reihe angeordnete Kapseln c angeordnet. Bei den Aufnahmesegmenten 22 handelt es sich um Formatteile, die je nach gewünschtem Anwendungsfall bzw. je nach verarbeitetem Format der Kapsel c an dem Förderrad 21 ausgetauscht werden können.

Zur Aufnahme der Kapseln c weist jedes Aufnahmesegment 22 im Ausführungsbeispiel fünf Aufnahmebohrungen 23 im Oberteil 27 und im Unterteil 28 auf. Es sind jedoch auch Aufnahmesegmente 22 mit mehr als fünf in Reihe angeordneten Aufnahmebohrungen 23 sowie mehr als einer Reihe an Aufnahmebohrungen 23 möglich. An der Station 1 werden die zu füllenden, leeren Kapseln c ungeordnet aufgegeben, ausgerichtet und geordnet dem Förderrad 21 zugeführt. Darauf werden die Kappen b von den Kapselunterteilen a im Bereich der Station 3 getrennt und beide ggf. vorab stichprobenartig von einer Wiegeeinrichtung 25 auf deren Nettogewicht gewogen. Anschließend werden in der Station 4 die Kappen b außer Deckung mit den Kapselunterteilen a gebracht (nicht dargestellt), sodass bei der Station 5 Füllgut in die Kapselunterteile a eingefüllt werden kann. Im Bereich der Station 7 werden die Kappen b wieder in Deckung mit den Kapselunterteilen a gebracht und bei der Station 8 werden stichprobenartig einzelne Kapseln c auf einer weiteren Wiegeeinrichtung 26 gewogen, wobei es sich hierbei um eine Brutto-Wiegung handelt. Im Bereich der Station 9 werden die Kapseln c auf Anwesenheit ihrer Kappen b überprüft, wobei Kapseln c bzw. einzelne Kapselunterteile a und Kappen b im Bereich der Station 10 ausgeschleust werden. Im Bereich der Station 11 ist eine erfindungsgemäße Sensorvorrichtung 30 angeordnet. Schließlich werden im Bereich der Station 12 die zwischenzeitlich entleerten Aufnahmesegmente 22 insbesondere mittels Blasluft gereinigt.

Bezüglich der genauen Funktion einer derartigen Kapselfüll- und Verschließmaschine wird darüber hinaus beispielhaft auf die DE 10 2005 016 124 A1 der Anmelderin verwiesen, in der weitere Details bezüglich deren grundsätzlicher Funktion und Wirkungsweise beschrieben sind.

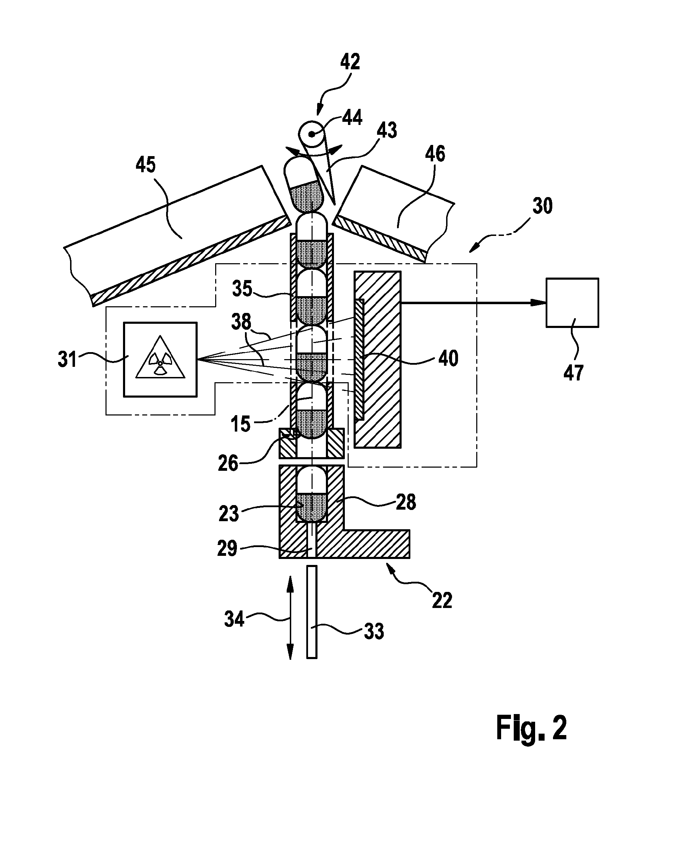

Wie insbesondere anhand der Fig. 2 erkennbar ist, ist die Sensorvorrichtung 30 oberhalb der Unterteile 28 der Aufnahmesegmente 22 angeordnet. Die Sensorvorrichtung 30 arbeitet mittels einer als Röntgenstrahlungsquelle 31 ausgebildeten Strahlungsquelle.

Ergänzend wird erwähnt, dass die Erfindung jedoch auch prinzipiell mittels anderer optischer Inspektionsverfahren, z. B. mittels eines Durchleuchtverfahrens mit einer Lichtquelle und einer Kamera, arbeiteten kann.

Unterhalb der Unterteile 28 der Aufnahmesegmente 22 ist in Ausrichtung mit den Aufnahmebohrungen 23 für jede Aufnahmebohrung 23 ein Auswerferstift 33 angeordnet, der entsprechend des Doppelpfeils 34 auf und ab beweglich ist und mit einer Durchgangsbohrung 29 im Unterteil 28 ausgerichtet ist. Oberhalb und in Ausrichtung mit den Aufnahmebohrungen 23 der Aufnahmesegmente 22 ist jeder Aufnahmebohrung 23 ein rohr- bzw. schachtförmiges Förderelement 35 zugeordnet. Das Förderelement 35 ist mit seiner Längsachse im Wesentlichen vertikal ausgerichtet und weist an seinem dem Aufnahmesegment 22 zugewandten Ende jeweils für jede Aufnahmebohrung 23 jeweils ein Klemmstück 36 auf, das ein Herausfallen der untersten Kapsel c aus dem Förderelement 35 zurück in Richtung der Aufnahmebohrung 23 verhindert.

Die Röntgenstrahlungsquelle 31 emittiert einen Röntgenstrahlungskegel 38, der mittels eines bildaufnehmenden bzw. bildverarbeitenden, insbesondere digital arbeitenden, als Röntgen-Großflächensensor ausgebildeten Detektors 40, welcher sich auf der der Röntgenstrahlungsquelle 31 gegenüberliegenden Seite der Kapsel c befindet, erfasst werden kann.

Um Störungen bei der Erfassung des Röntgenstrahlungskegels 38 im Bereich des Detektors 40 durch das Förderelement 35 zu vermeiden, ist das Förderelement 35 im Bereich des Röntgenstrahlungskegels 38 für die Röntgenstrahlung durch geeignete Maßnahmen (zum Beispiel durch eine Ausbildung aus Kunststoff) durchlässig ausgebildet, was durch die gestrichelte Darstellung des Förderelements 35 im Bereich des Röntgenstrahlungskegels 38 zum Ausdruck gebracht sein soll. Weiterhin ist es erfindungsgemäß wichtig, dass die Anordnung des Klemmstücks 36 und des Förderelements 35 zum Röntgenstrahlungskegel 38 derart ist, dass entsprechend der Fig. 2 eine Kapsel c sich vollständig im Strahlungskegel 38 befindet, wenn die unterste der als Reihe übereinander stehenden Kapseln c durch das Klemmstück 36 gehalten ist. Durch eine entsprechende Optik bzw. Anordnung (Abstand) des Förderelements 35 zur Röntgenstrahlungsquelle 31 ist es weiterhin sichergestellt, dass von dem Röntgenstrahlungskegel 38 möglichst keine Bereiche von Kapseln c unter- bzw. oberhalb der gerade durchleuchteten Kapsel c erfasst werden. Sollte dies trotzdem geschehen, zum Beispiel aufgrund von Toleranzen der Länge der Kapseln c, so kann dies ggf. durch eine entsprechende Software der nachfolgend noch erwähnten Auswerteeinrichtung 47 kompensiert werden. Erfindungsgemäß ist es vorgesehen, dass die Anordnung des Förderelements 35 zur Röntgenstrahlungsquelle 31 bzw. zum Röntgenstrahlungskegel 38 derart ist, dass der Röntgenstrahlungskegel 38 die Kapsel c senkrecht zu ihrer Längsachse 15 durchleuchtet, das bedeutet, dass mittels des Detektors 40 ein Bild entsprechend eines Längsschnitts durch die Kapsel c aufgenommen werden kann.

Der Detektor 40 sowie die Röntgenstrahlungsquelle 31 sind derart ausgebildet bzw. angeordnet, dass mittels diesen jeweils gleichzeitig mehrere, in einer Höhe nebeneinander angeordnete Kapseln c durchstrahlt bzw. der Röntgenstrahlungskegel 38 durch den Detektor 40 erfasst werden können.

Bei dem in den Fig. 1 und 2 dargestellten Ausführungsbeispiel sind in den Aufnahmesegmenten 22 in einer Reihe jeweils fünf Kapseln c angeordnet. Somit ist es mittels der Sensorvorrichtung 30 möglich, in einem Prüfschritt während einer Stillstandsphase der Kapseln c in dem Förderelement 35 jeweils alle fünf Kapseln c gleichzeitig zu untersuchen.

Oberhalb des Förderelements 35 ist eine Ausscheideeinrichtung 42 angeordnet. Die Ausscheideeinrichtung 42 umfasst für jedes der Förderelemente 35 eine separat ansteuerbare Ausscheideklappe 43, die in einer Achse 44 schwenkbar gelagert ist und je nach Stellung der Ausscheideklappe 43 einzelne Kapseln c in Richtung eines Gut-Schachtes 45 bzw. eines Schlecht-Schachtes 46 ausscheiden.

Die soweit beschriebene Sensorvorrichtung 30 für die Kapselfüll- und Verschließmaschine 100 arbeitet wie folgt: Das Förderrad 21 transportiert die Aufnahmesegmente 22 taktweise unterhalb des Bereichs der Sensorvorrichtung 30. In einer Stillstandsphase des Förderrades 21 werden die in dem Aufnahmesegment 22 befindlichen Kapseln c mittels der Auswerferstifte 33 synchron aus den Aufnahmebohrungen 23 des Unterteils 28 des Aufnahmesegments 22 nach oben in Richtung der Förderelemente 35 ausgeschoben. Hierbei liegen die jeweils zuvor ausgeschobenen Kapseln c noch jeweils an den Klemmstücken 36 an und werden beim Einschieben nachfolgender Kapseln c um jeweils eine Kapsellänge durch Anlagekontakt zwischen den Kapseln nach oben weiter geschoben. Aufgrund der Geometrie der Förderelemente 35 befinden sich weiterhin jeweils Kapseln c exakt innerhalb des Röntgenstrahlungskegels 38 der Röntgenstrahlungsquelle 31. Während einer Stillstandsphase in den Förderelementen 35, d.h., wenn in diesem Augenblick gerade keine Kapseln c in die Förderelemente 35 übergeschoben werden, wird mittels des Detektors 40 jeweils ein Bild der innerhalb des Röntgenstrahlungskegels 38 befindlichen Kapseln c aufgenommen und einer Auswerteeinrichtung 47 zugeführt. Die Auswerteeinrichtung 47 ermöglicht eine digitale Auswertung und Speicherung des aufgenommenen Bildes des Röntgenstrahlungskegels 38. Nachdem die Auswerteeinrichtung 47 das aufgenommene Bild hinsichtlich der gewünschten Eigenschaften, insbesondere hinsichtlich des Füllgewichtes, untersucht hat, können ggf. als "Schlecht-Kapsel c" identifizierte Kapseln c mittels der Ausscheideeinrichtung 42 aussortiert werden.

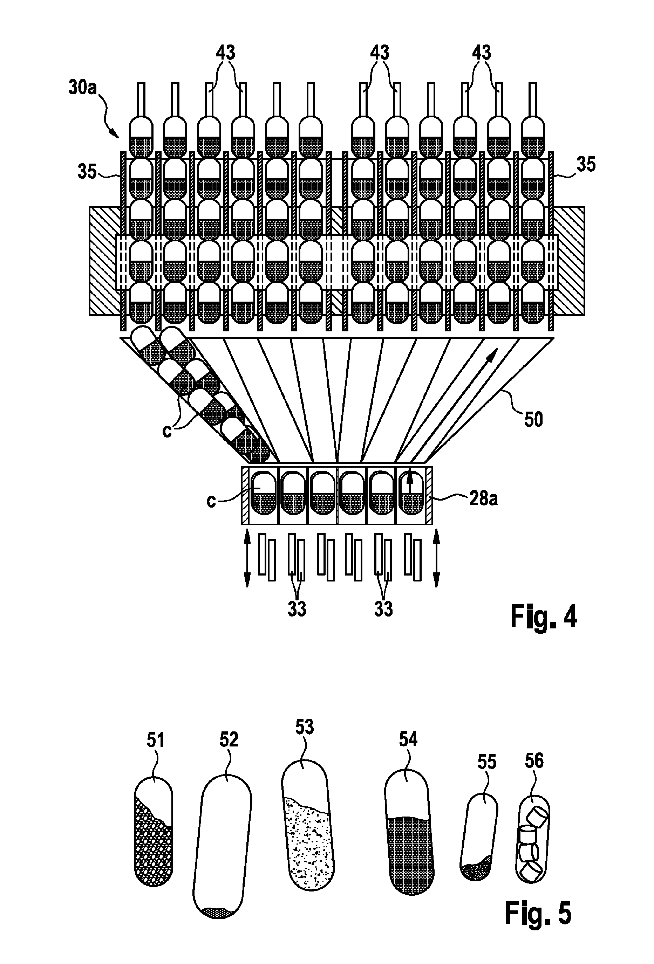

In der Fig. 5 sind beispielhaft nebeneinander sechs verschiedene, von einem Detektor 40 aufgenommene Aufnahmen 51 bis 56 von mit unterschiedlichen Füllgütern befüllten und unterschiedliche Größen aufweisenden Kapseln c dargestellt. Man kann bei diesen Aufnahmen 51 bis 56 verschiedene Füllgüter sowie verschiedene Füllpegel und Anordnungen der Füllgüter in den Kapseln c erkennen. Aufgrund des Auswerteprogramms der Auswerteeinrichtung 47 kann mittels der Sensorvorrichtung 30 nicht nur das jeweilige Füllgewicht der Kapsel c ermittelt werden, sondern es können zusätzlich weitere Auswertungen vorgenommen werden. Beispielhaft sei der Zustand der Kapselhülle (das bedeutet ein Erkennen von Defekten der Kapselhülle, wie z. B. Risse, Brüche, Quetschungen, Deformationen, usw.) genannt. Weiterhin ist es möglich, den Zustand des Füllguts, z.B. ob ein Pressling intakt oder zerstört ist, ob ein Tablettenbruch vorhanden ist, usw. zu erfassen. Auch kann grundsätzlich die Kapsel c auf Produktanwesenheit geprüft werden. Hierzu zählt beispielsweise das Abzählen von Tabletten, Mikrotabletten oder Kapseln in der Kapsel c oder deren Kombinationen. Grundsätzlich können natürlich auch nicht oder falsch gefüllte Kapseln c erkannt werden. Zuletzt sei beispielhaft erwähnt, dass die Kapseln c auch auf Fremdkörper (insbesondere Metallpartikel) untersucht werden können. Besonders vorteilhaft hierbei ist, dass durch die Anordnung bzw. Ausbildung der Förderelemente 35 der Röntgenstrahlungskegel 38 die Kapsel c vollständig, d.h. über deren gesamte Längserstreckung, erfasst, ohne dass hierbei die Kapseln c durch Teile der Förderelemente 35 verdeckt werden, wenn ggf. seitliche Führungen für die Kapseln c in den Förderelementen 35 zum Beispiel aus Kunststoff bestehen.

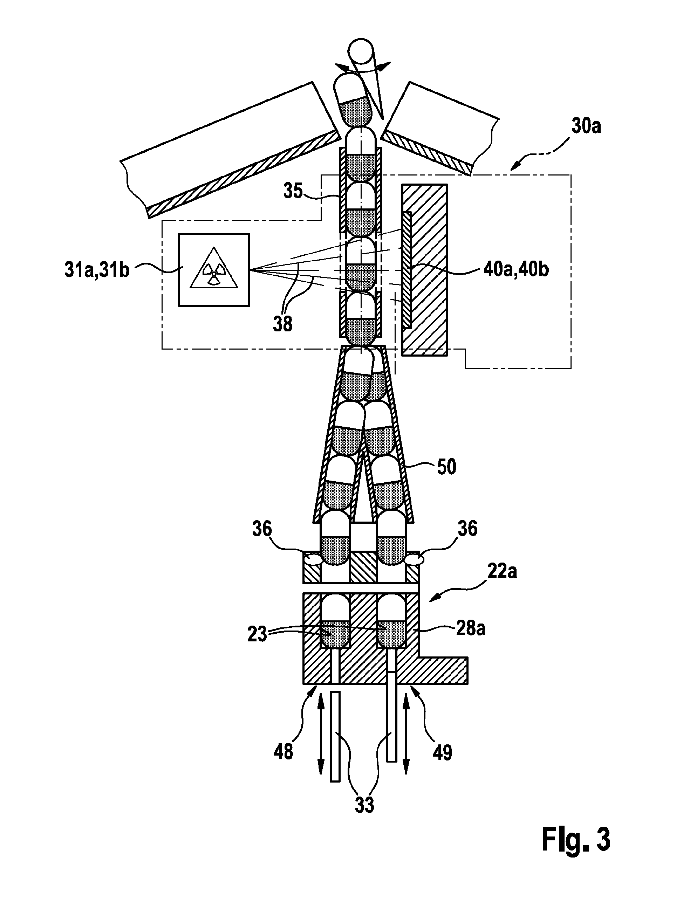

In den Fig. 3 und 4 ist eine modifizierte Sensorvorrichtung 30a dargestellt. Hierbei sind Aufnahmesegmente 22a bzw. Unterteile 28a vorgesehen, welche im Gegensatz zu den Aufnahmesegmenten 22 zwei Reihen 48, 49 mit Aufnahmebohrungen 23 für Kapseln c aufweisen. Wie man insbesondere anhand der Fig. 4 erkennt, sind hierbei in jeder der Reihen 48 und 49 jeweils sechs Kapseln c innerhalb eines Aufnahmesegmentes 22a angeordnet. Um die im Vergleich zum Aufnahmesegment 22 erhöhte Anzahl von Kapseln c trotzdem in einem einzigen Prüfschritt prüfen zu können, ist es vorgesehen, dass die Kapseln c mittels eines trichterförmigen Verteilers 50 derart in die einzelnen Förderelemente 35 übergeschoben werden, dass alle zwölf Kapseln c in einer Ebene nebeneinander angeordnet sind, wie dies insbesondere anhand der Fig. 4 erkennbar ist. Aufgrund der größeren Fläche der nebeneinander angeordneten Kapseln c kann es erforderlich sein, mehrere Röntgenstrahlungsquellen 31 a, 31 b sowie mehrere Detektoren 40a, 40b einzusetzen, welche in der Fig. 3 senkrecht zur Zeichenebene angeordnet sind.

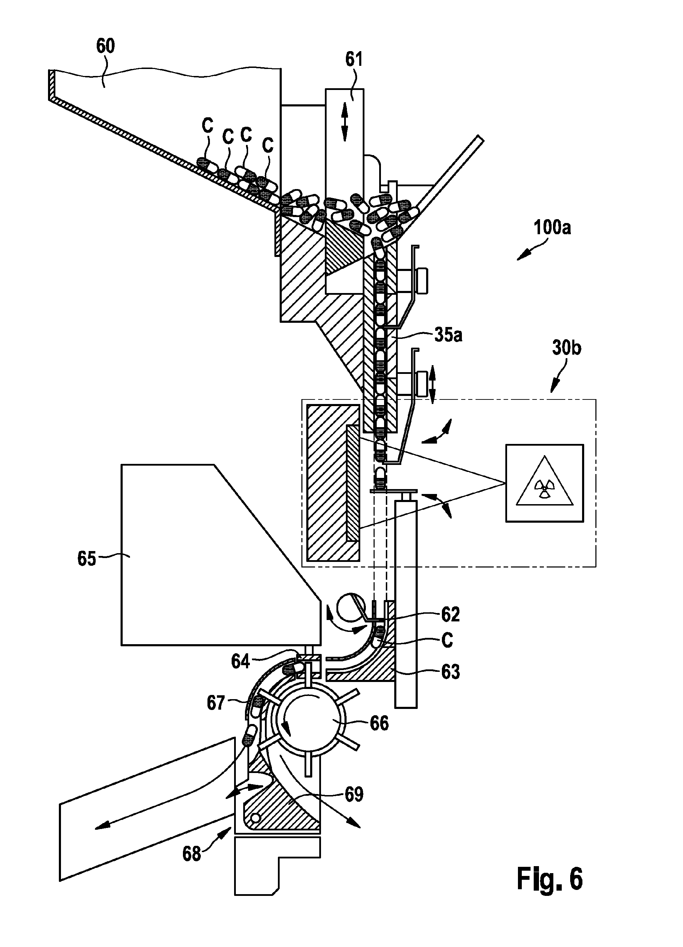

In der Fig. 6 ist eine Kapselkontrollvorrichtung 100a dargestellt. Die Kapselkontrollvorrichtung 100a kann dabei Bestandteil einer bereits beschriebenen Kapselfüll- und Verschließmaschine 100 sein, oder als separate Kontrollvorrichtung 100a betrieben werden. Bei der Kapselkontrollvorrichtung 100a ist ein Füllgutbehälter 60 mit bereits befüllten und verschlossenen Kapseln c vorgesehen. Mittels eines auf- und abbeweglichen Schiebers 61 werden die Kapseln c aus dem Füllgutbehälter 60 vereinzelt und als Reihe (oder aber in mehreren, senkrecht zur Zeichenebene der Fig. 6 angeordneten Reihen) dem Förderelement 35a zugeführt. Unterhalb des Füllgutbehälters 60 ist eine Sensoreinrichtung 30b angeordnet, deren Funktion bereits im Rahmen der Beschreibung der Kapselfüll- und Verschließmaschine 100 gemäß der Fig. 1 bis 5 erläutert wurde. Insbesondere lassen sich mit der Sensorvorrichtung 30b das Füllgewicht sowie eventuelle Beschädigungen oder Verunreinigungen der Kapseln c feststellen.

Unterhalb der Sensorvorrichtung 30b ist am Förderelement 35a eine Sperrklinke 62 vorgesehen, die jeweils eine zuvor im Bereich der Sensorvorrichtung 30b untersuchte Kapsel c freigibt bzw. diese sperrt. Das Förderelement 35a weist im Anschluss an die Sperrklinke 62 einen bogenförmigen Abschnitt 63 auf, an dessen Ausgang und fluchtend zu diesem, eine hängend angeordnete Wiegezelle 64 angeordnet ist. Die Wiegezelle 64 ist Bestandteil einer Wiegeeinrichtung 65, deren genauer Aufbau bzw. Wirkungsweise bereits in der DE 198 19 395 C1 der Anmelderin ausführlich erläutert wurde und auf die daher Bezug genommen wird.

Die Wiegeeinrichtung 65 weist insbesondere ein schrittweise im Gegenuhrzeigersinn bewegtes Flügelrad 66 auf, mit dessen Hilfe jeweils eine Kapsel c in den Bereich der Wiegezelle 64 sowie aus dieser heraus gefördert wird. An die Wiegeeinrichtung 65 schließt sich über einen weiteren bogenförmigen Bereich 67 eine zusätzliche Ausschleuseinrichtung 68 an, die eine bewegliche Klappe 69 aufweist. Mittels der Klappe 69 lassen sich, abhängig von dem Ergebnis der Auswertungen im Bereich der Sensorvorrichtung 33b bzw. der Wiegeeinrichtung 65 Gut-Kapseln c von Schlecht-Kapseln c trennen.

Ergänzend wird erwähnt, dass die Kapselkontrollvorrichtung 100a auch dahingehend modifiziert werden kann, dass kein Füllgutbehälter 60 vorgesehen ist. In diesem Fall ist die Wiegeeinrichtung 65 den Sensorvorrichtungen 30 bzw. 30a entsprechend den Fig. 1 bis 3 nachgeordnet bzw. schließt sich an diese an. Mit anderen Worten gesagt bedeutet dies, dass für jedes der Förderelemente 35 ein eigenes, separates Flügelrad 66 vorgesehen sein kann, wobei die Wiegeeinrichtung 65 dann ebenfalls für jedes Förderelement 35 eine eigene Wiegezelle 64 aufweist.

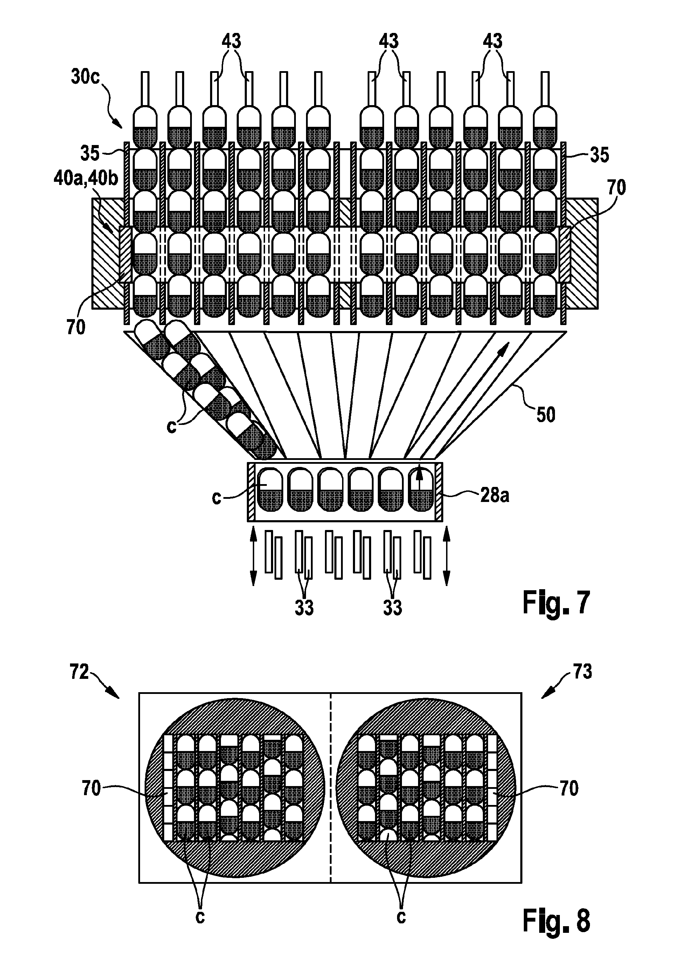

In der Fig. 7 ist eine gegenüber den Fig. 3 und 4 nochmals modifizierte Sensorvorrichtung 30c dargestellt. Bei der Sensorvorrichtung 30c ist im Strahlengang der (nicht dargestellten) Röntgenstrahlungsquelle an zwei gegenüberliegenden Seiten jeweils ein Referenzobjekt 70 angeordnet. Die Anordnung zweier (identischer) Referenzobjekte 70 erfolgt mit Blick darauf, dass jeweils sechs Kapseln c jeweils mittels eines Detektors 40a, 40b erfasst bzw. überprüft werden. Somit ist jedem Detektor 40a, 40b ein Referenzobjekt 70 zugeordnet. Wesentlich hierbei ist, dass, bei der Verwendung von Röntgenstrahlen, das Referenzobjekt 70 aus einem Material besteht, das der atomaren Zusammensetzung des zu analysierenden Materials, also dem Material der Kapsel c und dem Kapselinhalt, möglichst ähnlich ist. Darüber hinaus ist es vorteilhafterweise vorgesehen, dass das Referenzobjekt 70 keil- bzw. stufenförmig ausgebildet ist. Hierbei ist die Anordnung des Referenzobjektes 70 derart, dass sich die Höhe des keil- bzw. stufenförmigen Referenzobjektes 70 in Durchstrahlungsrichtung der Röntgenstrahlungsquelle 31 ändert. Wesentlich ist weiterhin, dass die Dämpfung der Röntgenstrahlung durch das Referenzobjekt 70 zumindest in einem Bereich des Referenzobjekts 70 größer ist als die größte von der Kapsel c verursachte Dämpfung (diese ist abhängig von der Dichte, der atomaren Zusammensetzung und der durchstrahlten Dicke von Füllgut und Kapsel c). Weiterhin muss die Dämpfung der Röntgenstrahlung durch das Referenzobjekt 70 an einer anderen Stelle bzw. an einem anderen Bereich des Referenzobjekts 70 kleiner sein als die kleinste von der Kapsel c verursachte Dämpfung. Durch die keil- bzw. stufenförmige Ausbildung des Referenzobjektes 70 werden dabei beliebig viele Abstufungen zwischen den beiden erwähnten Dämpfungen realisiert. In der Fig. 7 sind zwei Bilder 72, 73 dargestellt, welche mittels zweier Detektoren 40a, 40b erfasst und der Auswerteeinrichtung 47 zugeführt werden, wobei jeweils ein stufen- bzw. treppenartig ausgebildetes Referenzobjekt 70 Verwendung findet.

Für die Justierung der Detektoren 40a, 40b ist es erforderlich, dass das Referenzobjekt 70 aus dem Bild 72, 73 entfernt werden kann. Im laufenden Betrieb der Sensorvorrichtung 30c ist es darüber hinaus wesentlich, dass sich die Position und Lage des Referenzobjektes 70 nicht verändert. Zur Inbetriebnahme wird das Röntgenkamerasystem, bestehend aus der Röntgenstrahlungsquelle 31, 31 a bzw. 31 b und dem Detektor 40, 40a bzw. 40b zunächst ohne das Referenzobjekt 70 justiert. Anschließend wird ein Referenzobjekt 70 und ein zu vermessendes Objekt, d.h. eine Kapsel c vermessen bzw. ein Bild 72, 73 aufgenommen. Dieses Bild 72 bzw. 73 wird gespeichert. Anschließend wird optional ein zweites zu vermessendes Objekt bzw. eine zweite zu vermessende Kapsel c durchstrahlt und ein Bild 72, 73 aufgenommen und abgespeichert. Anschließend wird die Kapsel c im Bild 72, 73 lokalisiert. Die Graustufen des Referenzobjektes 70 werden ausgelesen und mit den realen geometrischen Abmessungen des Referenzobjektes 70 verknüpft bzw. in Verbindung gebracht. Anschließend wird das zu messende Objekt, d.h. die zu vermessende Kapsel c im Bild 72, 73 lokalisiert und dessen Informationen (z.B. einzelne Graustufenwerte, Fläche des Objektes auf dem Bild, etc.) mittels der Auswerteeinrichtung 47 aus dem Bild 72, 73 ausgelesen. Diese Objektinformationen (z.B. Graustufenwerte) werden pixelweise in eine virtuelle Dicke umgerechnet und zwar mit Hilfe der Informationen aus dem Referenzobjekt 70. Der Mittelwert dieser virtuellen Einzeldicken innerhalb der ausgewählten Fläche kann nun dem tatsächlichen gravimetrischen Gewicht der Kapsel c zugeordnet werden, welche mit einer gravimetrischen Wiegeeinrichtung ermittelt wurde. Anschließend wird das Referenzobjekt 70 in dem zweiten Bild 72, 73 lokalisiert. Die Graustufen des Referenzobjektes 70 werden ebenfalls ausgelesen und mit den Graustufenwerten des Referenzobjektes 70 aus dem ersten Bild verglichen. Sind die Graustufenwerte des (zweiten) Referenzobjektes 70 innerhalb einer festgelegten Grenze, wird das zweite aufgenommene Bild 72, 73 nicht korrigiert. Bei einer Veränderung der Informationen, z.B. der Grauwerte des zweiten Referenzobjektes 70 außerhalb festgelegter Grenzen, wird das Bild 72, 73 entsprechend korrigiert. Danach wird das zu vermessende Objekt (Kapsel c) analog wie beim ersten Bild 72, 73 lokalisiert und dessen Informationen werden aus dem Bild 72, 73 ausgelesen. Auch hier werden anschließend die Objektinformationen pixelweise in eine virtuelle Dicke umgerechnet und zwar mit Hilfe der Informationen aus dem Referenzobjekt 70. Der Mittelwert dieser virtuellen Einzeldicken kann nun dem tatsächlichen gravimetrischen Gewicht des Messobjektes zugeordnet werden. Wird nun in das Röntgenkamerasystem ein drittes zu vermessendes Objekt bzw. eine dritte zu vermessende Kapsel c sowie das Referenzobjekt 70 eingesetzt, ist das System mit den Informationen aus den beiden Bildern 72, 73, den Referenzobjekten 70 und den gravimetrischen Gewichten aus den ersten beiden Wägungen in der Lage, das Gewicht des dritten Objektes (und beliebig vieler weiterer Objekte) zu ermitteln.

Die soweit beschriebene Kapselfüll- und Verschließmaschine 100 bzw. die Kapselkontrollvorrichtung 100a können in vielfältiger Weise modifiziert werden. Erfindungswesentlich ist jedoch die Anordnung der Strahlungsquellen zu den durchleuchtenden Behältnissen derart, dass diese senkrecht zu deren Längsrichtung durchleuchtet werden.

## Patentansprüche

1. Sensorvorrichtung (30; 30a; 30b; 30c) für eine als Kapselfüll- und Verschließmaschine ausgebildete Verpackungsmaschine (100) oder für eine Kapselkontrollvorrichtung (100a), mit einem Positionierelement (35; 35a) zum Positionieren eines mit einem Füllgut befüllten, eine Längsachse (15) aufweisenden Behältnisses (c) im Bereich der Sensorvorrichtung (30; 30a; 30b; 30c) und mindestens einer Röntgenstrahlungsquelle (31; 31 a; 31 b) sowie mindestens einem Detektor (40; 40a; 40b) zur Erfassung der Strahlung, wobei die mindestens eine Röntgenstrahlungsquelle (31; 31 a; 31 b) das Behältnis (c) senkrecht zu seiner Längsachse (15) durchstrahlt, und wobei das Positionierelement als rohr- oder schachtförmiges Förderelement (35; 35a) ausgebildet ist, das in einem Strahlungskegel (38) der Strahlenquelle (31; 31 a; 31 b) für die Strahlung durchdringbar ist,
**dadurch gekennzeichnet,**
**dass** der Detektor (40; 40a; 40b) auf der der Röntgenstrahlungsquelle (31; 31 a; 31 b) gegenüberliegenden Seite des Behältnisses (c) angeordnet ist und die Strahlung der Röntgenstrahlungsquelle (31; 31 a; 31 b) nach dem Durchstrahlen des Behältnisses (c) erfasst, dass der Detektor (40; 40a; 40b) als bildauswertender Detektor (40; 40a; 40b) ausgebildet ist und mit einer Auswerteeinrichtung (47) zusammenwirkt, die eine digitale Datenauswertung ermöglicht, und dass mehrere Förderelemente (35; 35a) für die Behältnisse (c) parallel zueinander angeordnet sind, in Wirkverbindung mit einer gemeinsamen Strahlungsquelle (31; 31 a; 31 b) und einem gemeinsamen Detektor (40; 40a; 40b) angeordnet sind.

2. Vorrichtung nach Anspruch 1,
**dadurch gekennzeichnet,**
**dass** in dem Förderelement (35; 35a) die Behältnisse (c) als Reihe gestaut angeordnet sind und durch gegenseitigen Anlagekontakt der Behältnisse (c) zumindest im Bereich der Sensorvorrichtung (30; 30a; 30b; 30c) gefördert werden.

3. Vorrichtung nach Anspruch 2,
**dadurch gekennzeichnet,**
**dass** das Förderelement (35) oberhalb eines Aufnahmesegmentes (22; 22a) für die Behältnisse (c) angeordnet ist, aus dem die Behältnisse (c) mittels Ausschiebeelementen (33) in das Förderelement (35) übergeschoben werden.

4. Vorrichtung nach Anspruch 3,
**dadurch gekennzeichnet,**
**dass** das Förderelement (35) im Wesentlichen vertikal ausgerichtet ist und, dass dem Förderelement (35) ein Rückhalteelement (36) zugeordnet ist, das ein Herausfallen der Behältnisse (c) aus dem Förderelement (35) verhindert.

5. Vorrichtung nach einem der Ansprüche 1 bis 4,
**dadurch gekennzeichnet, dass** die Behältnisse (c) taktweise in den Bereich der Strahlungsquelle (31; 31 a; 31 b) gefördert werden und, dass der Detektor (40; 40a; 40b) jeweils in einer Stillstandsphase der Behältnisse (c) in dem Förderelement (35; 35a) die Strahlung erfasst.

6. Vorrichtung nach einem der Ansprüche 1 bis 5,
**dadurch gekennzeichnet,**
**dass** der Sensoreinrichtung (30; 30a; 30b) eine weitere Wiegeeinrichtung (65) nachgeschaltet ist, die wenigstens eine Wiegezelle (64) zum Wiegen des Behältnisses (c) aufweist.

7. Vorrichtung nach Anspruch 6,
**dadurch gekennzeichnet,**
**dass** die Wiegeeinrichtung (65) ein Förder- und Sperrelement (66) aufweist, das jeweils ein Behältnis (c) aus dem Bereich des Förderelements (35a) in den Bereich der Wiegezelle (64) und aus der Wiegezelle (64) heraus fördert.

8. Vorrichtung nach einem der Ansprüche 5 bis 7,
**dadurch gekennzeichnet,**
**dass** mittels der Strahlungsquelle (31; 31 a; 31 b) und des Detektors (40; 40a; 40b) ein Füllgewicht oder eine sonstige Eigenschaft des Behältnisses (c) erfasst wird.

9. Vorrichtung nach Anspruch 1,
**dadurch gekennzeichnet,**
**dass** die mindestens eine Strahlungsquelle (31; 31 a; 31 b) zusätzlich in Wirkverbindung mit einem Referenzobjekt (70) angeordnet ist und, dass der Detektor (40; 40a, 40b) gleichzeitig neben dem Bild (72, 73) des Behältnisses (c) zusätzlich das Bild (72, 73) des Referenzobjekts (70) erfasst und der Auswerteeinrichtung (47) zuführt.

10. Vorrichtung nach Anspruch 9,
**dadurch gekennzeichnet,**
**dass** das Referenzobjekt (70) aus einem Material besteht, das zumindest annähernd gleiche Absorptionseigenschaften für die Strahlung, insbesondere für die Röntgenstrahlung, aufweist wie das Behältnis (c).

11. Vorrichtung nach Anspruch 9 oder 10,
**dadurch gekennzeichnet,**
**dass** das Referenzobjekt (70) Bereiche unterschiedlicher Absorptionen für die Strahlung aufweist, wobei wenigstens ein Bereich vorhanden ist, dessen Absorption innerhalb der Toleranzen der zu messenden Eigenschaft des Behältnisses (c) geringer ist als die minimale Absorption des Behältnisses (c) und einen Bereich, dessen Absorption innerhalb der Toleranzen der zu messenden Eigenschaft des Behältnisses (c) größer ist als die maximale Absorption des Behältnisses (c).

12. Vorrichtung nach Anspruch 11,
**dadurch gekennzeichnet,**
**dass** das Referenzobjekt (70) keil- oder stufenförmig ausgebildet ist und, dass das Referenzobjekt (70) derart angeordnet ist, dass sich die Dicke des Referenzobjekts (70) in Strahlungsrichtung der Strahlungsquelle (31; 31a; 31 b) ändert.

## Claims

1. Sensor apparatus (30; 30a; 30b; 30c) for a packaging machine (100) which is in the form of a capsule filling and closing machine for or a capsule monitoring apparatus (100a) having a positioning element (35; 35a) for positioning of a container (c), which is filled with a filling material and has a longitudinal axis (15), in the area of the sensor apparatus (30; 30a; 30b; 30c), and having at least one X-ray radiation source (31; 31a; 31b) and at least one detector (40; 40a; 40b) for detection of the radiation, wherein the at least one X-ray radiation source (31; 31a; 31b) passes radiation through the container (c) at right angles to its longitudinal axis (15), and wherein the positioning element is in the form of a feed element (35; 35a), which is tubular or in the form of a shaft and through which the radiation can pass in a radiation lobe (38) from the beam source (31; 31a; 31b),
**characterized**
**in that** the detector (40; 40a; 40b) is arranged on the opposite side of the container (c) to the X-ray radiation source (31; 31a; 31b) and detects the radiation from the X-ray radiation source (31; 31a;
31b) after it has passed through the container (c), in that the detector (40; 40a; 40b) is in the form of an image-evaluating detector (40; 40a; 40b) and interacts with an evaluation device (47) which allows digital data evaluation, and in that a plurality of feed elements (35; 35a) for the containers (c) are arranged parallel to one another, arranged such that they are operatively connected to a common radiation source (31; 31a; 31b) and to a common detector (40; 40a; 40b).

2. Apparatus according to Claim 1,
**characterized**
**in that** the containers (c) are arranged stowed in a row in the feed element (35; 35a), and are fed by mutual touching contact of the containers (c) at least in the area of the sensor apparatus (30; 30a; 30b; 30c).

3. Apparatus according to Claim 2,
**characterized**
**in that** the feed element (35) is arranged above a holding segment (22; 22a) for the containers (c), from which the containers (c) are pushed over into the feed element (35) by means of pushing-out elements (33).

4. Apparatus according to Claim 3,
**characterized**
**in that** the feed element (35) is aligned essentially vertically and in that a restraint element (36) is associated with the feed element (35) and prevents the containers (c) from falling out of the feed element (35).

5. Apparatus according to one of Claims 1 to 4,
**characterized**
**in that** the containers (c) are fed cyclically into the area of the radiation source (31; 31a; 31b), and in that the detector (40; 40a; 430b) in each case detects the radiation in the feed element (35; 35a) in a stationary phase of the containers (c).

6. Apparatus according to one of Claims 1 to 5,
**characterized**
**in that** the sensor device (30; 30a; 30b) is followed by a further weighing device (65), which has at least one weighing cell (64) for weighing the container (c).

7. Apparatus according to Claim 6,
**characterized**
**in that** the weighing device (65) has a feed and blocking element (66), which in each case feeds a container (c) from the area of the feed element (35a) into the area of the weighing cell (64) and out of the weighing cell (64).

8. Apparatus according to one of Claims 5 to 7,
**characterized**
**in that** a filling weight or another characteristic of the container (c) is detected by means of the radiation source (31; 31a; 31b) and the detector (40; 40a; 40b).

9. Apparatus according to Claim 1,
**characterized**
**in that** the at least one radiation source (31; 31a; 31b) is additionally arranged such that it is operatively connected to a reference object (70), and in that the detector (40; 40a; 40b) at the same time additionally detects the image (72, 73) of the reference object (70), in addition to the image (72, 73) of the container (c), and supplies this to the evaluation device (47).

10. Apparatus according to Claim 9,
**characterized**
**in that** the reference object (70) is composed of a material which at least approximately has the same absorption characteristics for the radiation, in particular for the X-ray radiation, as the container (c).

11. Apparatus according to Claim 9 or 10,
**characterized**
**in that** the reference object (70) has areas of different absorptions for the radiation, with at least one area being provided whose absorption, within the tolerances of the characteristic of the container (c) to be measured, is less than the minimum absorption of the container (c), and an area whose absorption, within the tolerances of the characteristic of the container (c) to be measured, is greater than the maximum absorption of the container (c).

12. Apparatus according to Claim 11,
**characterized**
**in that** the reference object (70) is in the form of a wedge or step, and in that the reference object (70) is arranged such that the thickness of the reference object (70) varies in the radiation direction of the radiation source (31; 31a; 31b).

## Revendications

1. Ensemble de capteur (30; 30a; 30b; 30c) pour machine d'emballage (100) configurée comme machine d'embouteillage ou pour ensemble (100a) de contrôle d'embouteillage, et présentant
un élément de positionnement (35; 35a) qui positionne au niveau de l'ensemble de capteur (30; 30a; 30b; 30c) un récipient (c) présentant un axe longitudinal (15) et rempli de produit,
au moins une source (31; 31a; 31b) de rayons X et au moins un détecteur (40; 40a; 40b) qui détecte le rayonnement,
les rayons X de la ou des sources (31; 31a; 31b) traversant le récipient (c) perpendiculairement par rapport à son axe longitudinal (15),
l'élément de positionnement étant configuré comme élément de transport (35; 35a) en forme de tube ou de puits qui peut intersecter un cône de rayonnement (38) de la source (31; 31a; 31b) de rayonnement,
**caractérisé en ce que**
le détecteur (40; 40a; 40b) est disposé sur le côté du récipient (c) opposé à la source (31; 31a; 31b) de rayons X et saisit le rayonnement de la source (31; 31a; 31b) de rayons X après qu'il a traversé le récipient (c),
**en ce que** le détecteur (40; 40a; 40b) est configuré comme détecteur (40; 40a; 40b) d'évaluation d'image et coopère avec un dispositif d'évaluation (47) qui permet une évaluation numérique des données et
**en ce que** plusieurs éléments de transport (35; 35a) de récipients (c) sont disposés parallèlement les uns aux autres et sont disposés de manière à coopérer avec une source commune (31; 31a; 31b) de rayonnement et un détecteur (40; 40a; 40b) commun.

2. Ensemble selon la revendication 1, **caractérisé en ce que** les récipients (c) s'accumulent en rangées dans l'élément de transport (35; 35a) et sont transportés au moins au niveau de l'ensemble de capteur (30; 30a; 30b; 30c) par contact mutuel entre les récipients (c).

3. Ensemble selon la revendication 2, **caractérisé en ce que** l'élément de transport (35) est disposé au-dessus d'un segment (22; 22a) de réception des récipients (c) hors duquel les récipients (c) sont poussés dans l'élément de transport (35) au moyen d'éléments d'expulsion (33).

4. Ensemble selon la revendication 3, **caractérisé en ce que** l'élément de transport (35) est orienté essentiellement à la verticale et **en ce qu'**un élément de retenue (36) qui empêche que les récipients (c) tombent hors de l'élément de transport (35) est associé à l'élément de transport (35).

5. Ensemble selon l'une des revendications 1 à 4, **caractérisé en ce que** les récipients (c) sont transportés de manière cadencée au niveau de la source (31; 31a; 31b) de rayonnement et **en ce que** le détecteur (40; 40a; 40b), saisit le rayonnement dans une phase d'arrêt des récipients (c) dans l'élément de transport (35; 35a).

6. Ensemble selon l'une des revendications 1 à 5, **caractérisé en ce qu'**un dispositif de pesée (65) qui présente au moins une cellule de pesée (64) qui pèse les récipients (c) est raccordé en aval du dispositif de capteur (30; 30a; 30b).

7. Ensemble selon la revendication 6, **caractérisé en ce que** le dispositif de pesée (65) présente un élément de transport et de blocage (66) qui expulse chaque fois un récipient (c) de la zone de l'élément de transport (35a) pour l'amener dans la zone de la cellule de pesée (64) et hors de la cellule de pesée (64).

8. Ensemble selon l'une des revendications 5 à 7, **caractérisé en ce que** le poids de remplissage ou une autre propriété du récipient (c) sont saisis au moyen de la source (31; 31a; 31b) de rayonnement et du détecteur (40; 40a; 40b).

9. Ensemble selon la revendication 1, **caractérisé en ce que** la ou les sources (31; 31a; 31b) de rayonnement sont en outre disposées de manière à coopérer avec un objet de référence (70) et **en ce qu'**en même temps que l'image (72, 73) du récipient (c), le détecteur (40; 40a; 40b) saisit l'image (72, 73) de l'objet de référence (70) et l'envoie au dispositif d'évaluation (47).

10. Ensemble selon la revendication 9, **caractérisé en ce que** l'objet de référence (70) est constitué d'un matériau qui présente au moins approximativement les mêmes propriétés d'absorption du rayonnement et en particulier des rayons X que le récipient (c).

11. Ensemble selon les revendications 9 ou 10, **caractérisé en ce que** l'objet de référence (70) présente des parties de différentes absorptions du rayonnement, avec au moins une partie dont l'absorption à l'intérieur des tolérances de la propriété du récipient (c) à mesurer est inférieure à l'absorption minimale du récipient (c) et une partie dont l'absorption à l'intérieur des tolérances de la propriété à mesurer du récipient (c) est supérieure à l'absorption maximale du récipient (c).

12. Ensemble selon la revendication 11, **caractérisé en ce que** l'objet de référence (70) est configuré en forme de biseau ou de gradin et **en ce que** l'objet de référence (70) est disposé de telle sorte que l'épaisseur de l'objet de référence (70) varie dans la direction d'émission de la source (31; 31a; 31b) de rayonnement.
